# FASCICULE DE BREVET EUROPEEN

(11) **EP 1 738 934 B1**
(45) Date de publication et mention de la délivrance du brevet: **03.12.2008**
(21) Numéro de dépôt: 06116213.7
(22) Date de dépôt: 28.06.2006
(51) Int. Cl.: B60C 17/06

(54) **Perfectionement des ensembles comprenant un boudin permettant de rouler à l'état degonflé**
Verbesserung von Notlaufsystemen, die eine wulstähnliche Einlage haben
Improvement in assemblies comprising a run flat insert

(30) Priorité: 30.06.2005 FR 0506753
(43) Date de publication de la demande: 03.01.2007
(73) Titulaire: Société de Technologie Michelin, 63000 Clermont-Ferrand Cedex 09 (FR); Michelin Recherche et Technique S.A., 1763 Granges-Paccot (CH)
(72) Inventeur: Tramond, Philippe, 63230, SAINT OURS LES ROCHES (FR); Fayol, Martial M., 63530, VOLVIC (FR); Gobert, Michel, 63100, CLERMONT-FERRAND (FR); Peyron, Georges, 63200, RIOM (FR)
(74) Mandataire: Lasson, Cédric Y. M.

(56) Documents cités:
- EP-A- 0 314 988

## Description

L'invention concerne les systèmes de roulage à plat destinés à équiper les véhicules automobiles. Ces systèmes comportent une jante dotée d'une valve, un pneumatique, et enferment un boudin de forme approximativement toroïdale. Ce boudin, plus communément dénommé boudin mousse, est généralement réalisé en caoutchouc alvéolaire à cellules fermées. Il est destiné à supporter la charge en cas de perte de pression du pneumatique. Les alvéoles peuvent, dans certains cas, contenir un gaz sous pression.

Des dispositifs de sécurité de ce type sont connus de l'art antérieur et de nombreuses variantes de réalisation ont été proposées. L'une d'entre elles est divulguée dans le brevet FR 1 450 638 qui en expose le principe de fonctionnement et décrit le comportement du boudin sous l'effet de la force centrifuge. Cette publication propose d'améliorer la tenue du boudin mousse sur la jante, et de mettre la face radialement intérieure du boudin en contact avec la pression atmosphérique, alors que la pression de gonflage agit sur la face radialement extérieure de ce boudin.

Pour obtenir cet effet, il est proposé de placer une membrane annulaire étanche à l'air, ou encore un opercule étanche à l'air, à l'interposition entre chacun des flancs du boudin et la paroi intérieure de chacun des bourrelets de l'enveloppe afin de créer un premier compartiment en communication avec l'atmosphère, et un second compartiment sous pression.

De la différence de pression entre les deux compartiments, il résulte une force centripète, dirigée radialement vers l'intérieur agissant sur le boudin et ayant pour effet de plaquer ledit boudin sur la jante en comprimant le gaz contenu dans les alvéoles. L'action de la pression de gonflage a également pour conséquence la réduction du volume dudit boudin ce qui permet d'éviter tout contact entre la paroi interne du pneumatique et le boudin mousse. Cette force s'oppose également à la force centrifuge et participe au maintien du boudin en position contre la jante lorsque le véhicule atteint une vitesse élevée.

Lorsque la pression dans l'enveloppe passe en dessous d'un certain seuil, le boudin mousse reprend sa forme naturelle et occupe tout le volume intérieur de l'enveloppe, et participe au maintien du pneumatique.

Ce même brevet décrit également une forme particulière de réalisation de la valve qui est conçue de telle manière qu'elle permet de mettre en communication avec l'atmosphère le premier compartiment et de gonfler à la pression d'usage du pneumatique le second compartiment.

Toutefois, cette première proposition peut s'avérer insuffisante lorsque l'on désire accroître la vitesse du véhicule. A cet effet une amélioration visant à modifier l'ancrage du boudin mousse sur la jante est décrite dans le brevet EP 314 988. La solution consiste à modifier le profil de la jante en créant une gorge dont les parois latérales comportent des contre dépouilles dans lesquelles la base du boudin mousse est ancrée sous l'effet de la pression. En absence de membrane annulaire, l'étanchéité entre le compartiment sous pression et le compartiment à la pression atmosphérique est assurée par le contact entre le boudin mousse avec des bossages situés sur les faces latérales radialement externes de la gorge.

Ce brevet décrit également la disposition dans la jante des orifices de gonflage et de mise à la pression atmosphérique.

Les deux solutions décrites dans les brevets cités ci-dessus représentent des améliorations certaines de la manière de maintenir le boudin mousse plaqué contre la jante pendant le roulage mais s'avèrent encore insuffisantes lorsque l'on veut une nouvelle fois élever le seuil de vitesse à partir duquel le boudin mousse perd le contact avec la jante sous l'effet des forces centrifuges.

L'objet de la présente invention est de proposer une amélioration des systèmes tels que décrits précédemment et comprenant :
- une roue comprenant une jante dotée d'une valve,
- un pneumatique monté sur la jante de ladite roue et
- un boudin mousse placé à l'intérieur du volume délimité par la paroi interne du pneumatique et la jante de la roue, dans lequel le boudin mousse est disposé dans un premier compartiment (A) en communication avec l'atmosphère par l'intermédiaire d'un conduit et isolé du reste de l'espace intérieur de l'enveloppe du pneumatique par un dispositif assurant l'étanchéité entre la paroi dudit compartiment et un élément de la paroi interne de la jante ou de l'enveloppe, de manière à former un deuxième compartiment (B) étanche à l'air, communiquant avec la valve de gonflage, et gonflé à la pression d'utilisation du pneumatique.

Il a été mis en évidence qu'en obturant ledit conduit reliant le premier compartiment A et l'atmosphère pendant le roulage, il est possible d'augmenter le seuil de vitesse au-delà duquel la base du boudin mousse, soumis aux effets de la force centrifuge, est susceptible de décoller de la jante et de venir en contact avec la partie intérieure du sommet du pneumatique.

En effet, en empêchant l'air atmosphérique de pénétrer dans le premier compartiment lorsque le boudin mousse est soumis à l'action des forces centrifuges, on prive ce compartiment de la possibilité d'augmenter son volume sans provoquer une baisse de la pression en son sein. Cette réduction de la pression appliquée sur la surface du boudin mousse, augmente d'autant l'effet de plaquage de la base du boudin sur la partie radialement interne de la jante au même titre qu'une ventouse collée à la surface d'une paroi. La limitation de l'éloignement de la base du boudin mousse permet d'éviter le décollement du boudin mousse de la jante sous l'action de la force centrifuge ce qui serait susceptible de provoquer une instabilité.

Cet effet ventouse s'ajoute à la pression de gonflage et améliore d'autant le maintien du contact entre le boudin mousse et la jante. La suppression de ce composant a pour effet d'alléger d'autant le système et d'améliorer le confort et le comportement du véhicule en diminuant les effets néfastes liés à la masse non suspendue.

On observe également qu'il demeure important de pouvoir mettre le premier compartiment en contact avec l'atmosphère entre deux phases de roulage de manière à laisser s'échapper les gaz qui sont susceptibles de s'introduire dans le premier compartiment et qui proviennent du boudin mousse lui-même lorsqu'il comporte des cellules remplies de gaz sous pression qui peuvent avoir tendance à relâcher une partie de ce gaz.

L'invention a également pour objet de proposer des formes de réalisation particulières du dispositif permettant d'obturer le conduit reliant ledit premier compartiment à l'atmosphère pendant le roulage. Ce dispositif d'obturation peut être armé manuellement ou être activé en cours de roulage sous l'effet de la force centrifuge.

Afin de mieux comprendre l'invention, les figures 1 à 6 ont pour objet d'illustrer des formes de réalisation du dispositif d'obturation du conduit de mise à l'atmosphère du dit premier compartiment adaptées aux systèmes divulgués dans les brevets FR 1 450 638 et EP 314 988 et dans lesquelles :
- la figure 1 représente une vue schématique en coupe d'un système tel que décrit dans le brevet FR 1 450 638.
- les figures 2 et 3 représentent une vue schématique en coupe d'une valve dotée d'une virole rotative,
- les figures 4 et 5 représentent une vue schématique en coupe d'une valve dotée d'un clapet mobile,
- la figure 6 représente une vue schématique en coupe d'un dispositif d'obturation à clapet mobile intégré dans une jante telle décrite dans le brevet EP 314 988.

Les éléments identiques ou de même nature sont signalés par des références numériques identiques.

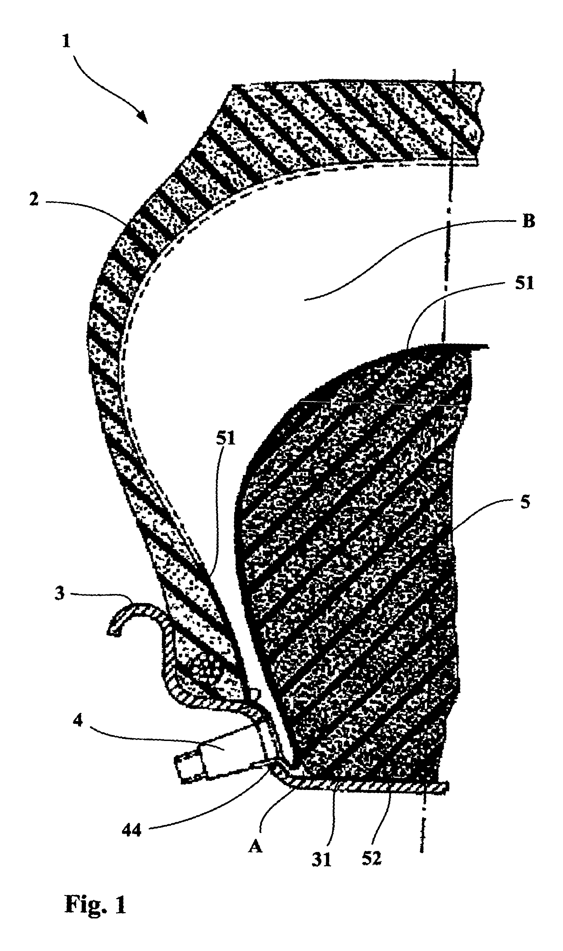

La figure 1 représente une vue schématique d'un système 1 comportant un pneumatique 2, monté sur une jante 3, comportant une valve 4. Un boudin mousse 5 est placé à l'intérieur de l'espace formé par la jante et la partie interne du pneumatique. Un opercule étanche à l'air 51 est disposé sur toute la circonférence radialement externe du boudin mousse et se prolonge pour venir adhérer sur la paroi interne du bourrelet du pneumatique avec lequel il forme une liaison étanche à l'air. La base 52 du boudin mousse repose sur la partie radialement interne 31 de la jante 3.

Cet opercule délimite deux compartiments dont le premier (A), est situé dans l'espace compris entre la jante et la paroi radialement interne de l'opercule 51, et dont le second (B) est situé entre la paroi interne du pneumatique et la paroi radialement externe dudit opercule.

Le premier compartiment A enferme le boudin mousse 5 et communique avec l'atmosphère par l'intermédiaire d'un canal 44 pratiqué dans la valve 4. Le second compartiment B peut être porté à la pression d'utilisation du pneumatique par l'intermédiaire du conduit principal de la valve 4.

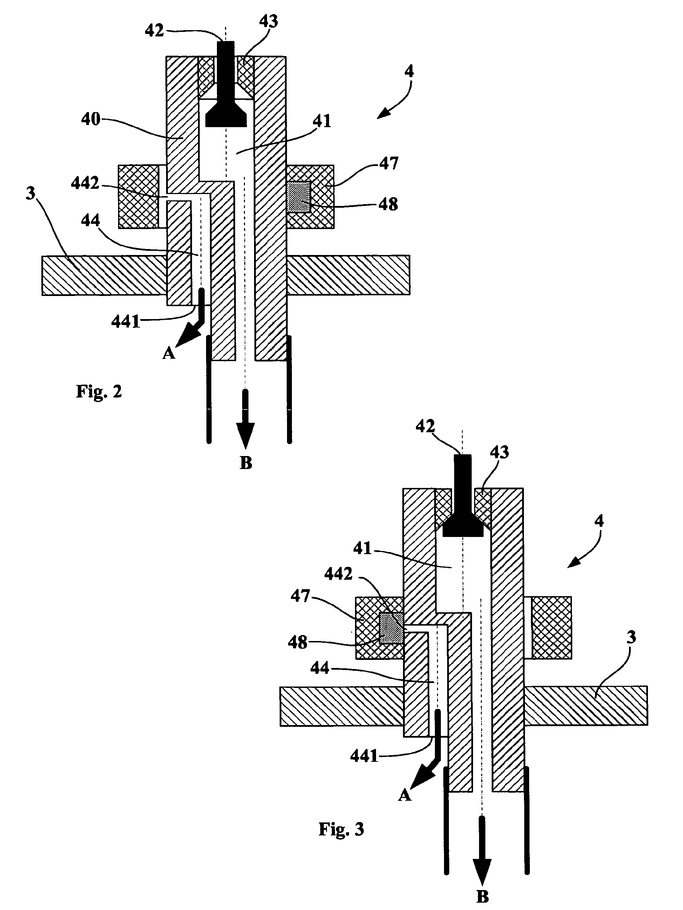

Les figures 2, 3, 4 et 5 détaillent des formes particulières de réalisation de la valve de gonflage 4 permettant de réaliser un système conforme à l'invention à partir d'un ensemble tel que décrit précédemment.

La figure 2 décrit en vue schématique une valve 4, montée sur une jante 3. La valve est formée d'un corps 40 comportant un conduit 41 obturé vers l'extérieur par un clapet mobile 42 reposant sur son siège 43. Le conduit 41 communique avec le second compartiment B et, en décollant le clapet de son siège, il est possible de gonfler le second compartiment B par l'intermédiaire du conduit 41.

La valve comporte également sur un de ses cotés un conduit 44, dont un des orifices 441 communique avec le premier compartiment A, et dont le second orifice 442 peut être mis en communication avec l'atmosphère. Une bague rotative 47, comportant un joint étanche 48, est manoeuvrable dans une première position de manière à laisser les gaz circuler librement ainsi que cela est représenté à la figure 2, et dans une deuxième position de manière à obturer l'orifice 442 comme cela est illustré sur la figure 3.

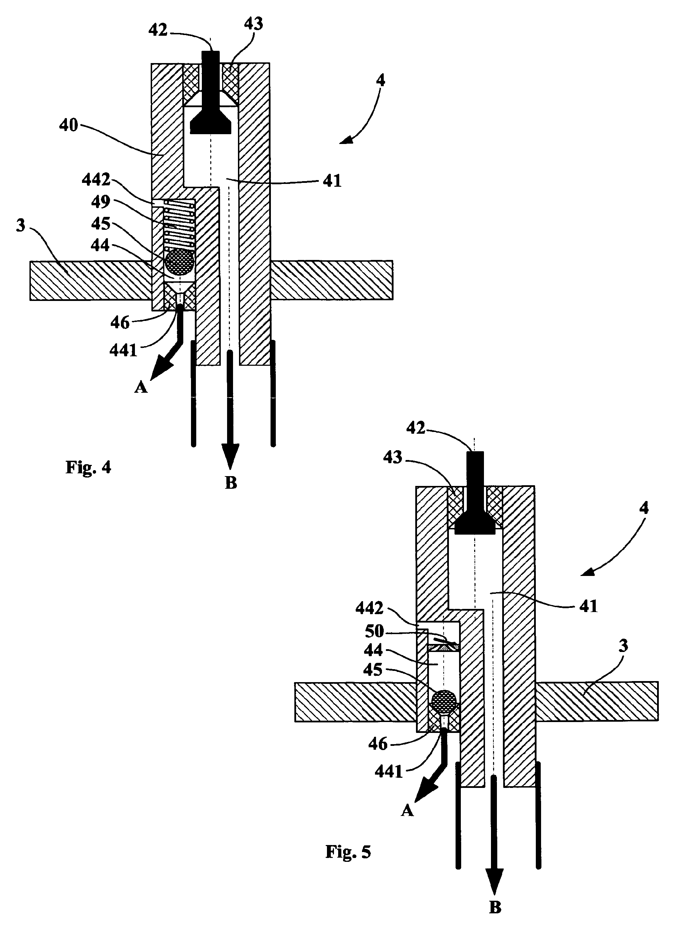

Les figures 4 et 5 présentent une alternative de réalisation dans laquelle le conduit 44 comporte sur la partie de l'orifice 441 débouchant vers le premier compartiment A, un siège 46 sur lequel vient s'appuyer un clapet mobile 45. Le clapet mobile a sensiblement la forme d'une bille. Sous l'action de la force centrifuge la bille est entraînée contre le siège 46 et vient obturer de manière étanche le conduit 44. Lorsque le véhicule est à l'arrêt, la bille décolle du siège sous l'action des forces de gravité.

En plaçant un ressort 49, tel que représenté sur la figure 4, dont l'action a pour effet de repousser la bille contre son siège 46, on autorise la mise à l'air libre du premier compartiment A, uniquement lorsque la pression à l'intérieur de ce dernier est supérieure à une pression de tarage connue et supérieure à la pression atmosphérique

Inversement, en plaçant ledit ressort (non repésenté), ou son équivalent, entre la bille 45 et le siège 46, il est possible de diminuer la force nécessaire au décollage de la bille et de favoriser la mise à l'air libre du premier compartiment A, quelle que soit la position de la roue à l'arrêt.

De manière équivalente, en disposant un clapet anti-retour 50, tel que représenté schématiquement sur la figure 5, au niveau du conduit 44, on autorise la mise à l'air libre du premier compartiment A uniquement lorsque la pression à l'intérieur de ce dernier est supérieure à la pression atmosphérique. Ce clapet 50 devra être positionné de manière à ne pas gêner les mouvements de la bille 45.

Il est également possible de placer le siège 46 de l'autre coté du conduit 44, lorsque la configuration de montage de la valve sur la jante tend à inverser l'action de la force centrifuge sur la bille.

Ainsi, les deux exemples de réalisation décrits ci-dessus permettent d'obturer de manière étanche le conduit 44 mettant en communication le premier compartiment A avec l'atmosphère. Dans le premier mode de réalisation il est nécessaire de manoeuvrer une bague tournante entre deux phases de roulage, alors que le seul effet de la force centrifuge et de la gravité permet de remplir les fonctions désirées, sans intervention de l'utilisateur, dans le cas du deuxième mode de réalisation décrit ci-dessus.

Il est bien évidemment possible de concevoir des dispositifs équivalents tels que des conduits de mise à l'air libre placés à des endroits distincts du point de montage de la valve de gonflage, et mettant en communication le premier compartiment A avec l'air libre.

Dans tous les cas de figure, on veillera à disposer l'orifice 442 de manière à ce que les matières extérieures telles que la boue, les poussières, l'eau de pluie ne puissent pas pénétrer par cet orifice dans le premier compartiment A. Une première solution consiste à l'éloigner suffisamment de la surface extérieure de la jante 3 afin d'empêcher les matières qui s'y déposent d'atteindre l'orifice 442. Une autre solution consiste à protéger l'orifice par une bague du type 47 de celle décrite précédemment, ladite bague étant démunie de moyen d'obturation tel qu'un joint étanche 48.

Bien que non représentés sur les figures, ces dispositifs peuvent tout aussi bien être obturés par un bouchon à ouverture et fermeture manuelle, par une bague rotative semblable à celle faisant l'objet de la présente description, ces deux dispositifs étant manoeuvrés manuellement par l'utilisateur entre deux phases de roulage, ou par un dispositif comprenant un clapet mobile équivalent à celui également décrit ci-dessus.

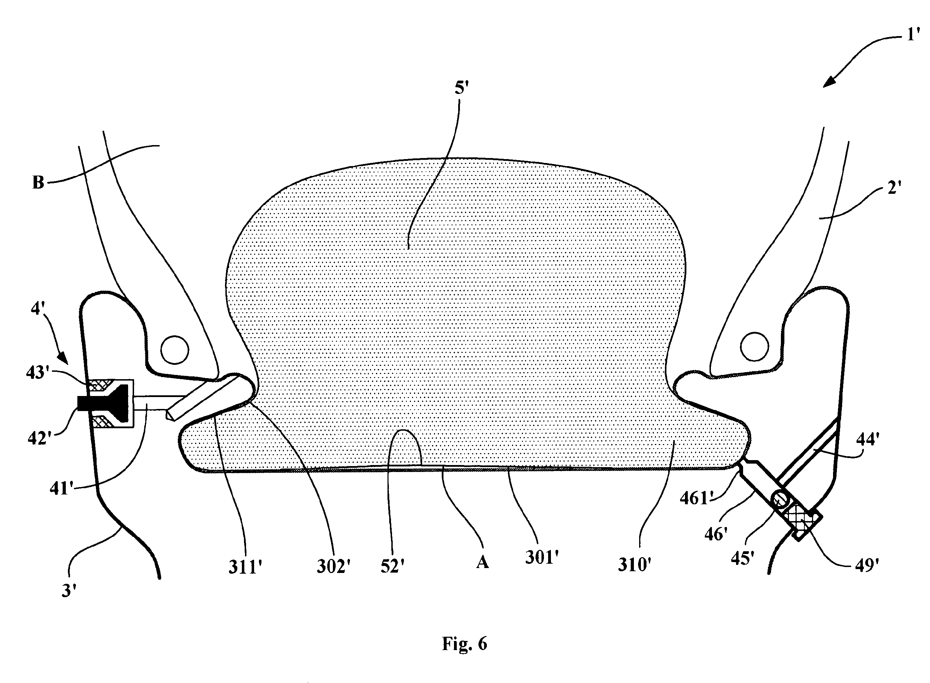

La figure 6 illustre un mode de réalisation de l'invention dans le cas de la jante décrite dans la publication EP 314 988, dans lequel le système 1' comprend un pneumatique 2' monté sur une jante 3'. La dite jante 3' comporte une gorge 310'destinée à recevoir un boudin mousse 5'. La gorge 310', dont la section méridienne a sensiblement la forme d'un « U » dont la concavité est orientée radialement vers l'extérieur, la base dudit « U » constituant le fond 301' de la gorge étant approximativement parallèle à l'axe de rotation du système 1', est délimitée axialement de part et d'autre par des parois latérales 302' s'étendant radialement vers l'extérieur par rapport au fond 301' de la gorge 310'. Un orifice (46', 44') de mise à l'air libre destiné à réaliser une communication avec la pression atmosphérique est prévu dans ladite gorge 310'. Les parois latérales 302' comportent chacune au moins une contre dépouille 311'. Ledit orifice (46', 44') de mise à l'air libre est situé radialement vers l'extérieur par rapport aux contre dépouilles 311' et sur chacune des dites parois latérale 302', de sorte que, par rétraction dimensionnelle due au gonflage lors du montage, le boudin 5' prenne sa configuration et sa place finale dans les contre dépouilles 311' prévues sur la jante.

En faisant en sorte que la surface externe du boudin mousse 5' soit recouverte d'un matériau étanche à l'air, le premier compartiment A est délimité par le fond 301' de la gorge 310' et par la paroi du boudin mousse située radialement vers l'intérieur et délimitée par le contact étanche réalisé entre le boudin mousse 5' et les parois latérales 302' de la gorge 310'. Le compartiment B est compris entre la paroi interne du pneumatique 2' et la paroi du boudin mousse 5' située radialement à l'extérieur des points d'étanchéité.

La base 52' du boudin mousse 5' repose sur la partie radialement interne 301' correspondant au fond de la gorge 310' de la jante 3'.

Le conduit de mise à l'air libre du premier compartiment comporte un premier conduit 46' dont l'orifice 461', débouchant dans le premier compartiment A, prend la forme d'un siège sur lequel vient s'appuyer un clapet mobile 45'. Un bouchon 49' obture de façon permanente l'autre extrémité du conduit 46'. Un second conduit 44' fait communiquer le conduit 46' avec l'air extérieur. Comme cela est déjà illustré dans l'exemple de réalisation précédent, le clapet mobile 45' a sensiblement la forme d'une bille. L'orifice 44' est orienté radialement vers l'extérieur de manière à favoriser l'évacuation des matières étrangères externes sous l'action des forces centrifuges lors du roulage.

La force centrifuge entraîne également la bille 45'contre le siège 461', ce qui a pour effet d'obturer le conduit 46'. Lorsque le véhicule est à l'arrêt, la bille 45' décolle du siège 461' sous le seul effet de la force de gravité, et ouvre une voie de communication entre le premier compartiment A et l'air extérieur.

Le gonflage du compartiment B se fait de manière connue par l'intermédiaire d'une valve 4' reliée au conduit 41', et dont l'orifice débouchant à l'air libre est obturé après gonflage par le clapet mobile 42' reposant sur le siège 43'. Afin de favoriser l'évacuation de l'air et la prise d'étanchéité du flanc du boudin mousse avec les dites parois latérale 302' il est parfois souhaitable de disposer une mise à l'air libre du premier compartiment A au niveau de chacune des contre dépouilles 311'situées axialement de part et d'autre de la jante 3'.

La mise en oeuvre des dispositifs conformes à l'invention sur des systèmes tels que décrits précédemment a permis d'améliorer les performances de roulage à haute vitesse. Ainsi pour un système du type de celui décrit dans la publication FR 1 450 638, il a été possible d'augmenter d'environ 25 km/h le seuil au-delà duquel la base (52, 52') du boudin mousse décroche de la jante (31, 301').

On observera que l'amélioration de l'effet décrit ci-dessus peut être obtenu en modifiant dans un sens favorable les caractéristiques de conception du système, et en particulier la surface de contact entre la jante et le boudin mousse en agissant par exemple sur la largeur de la jante.

## Revendications

1. Système (1, 1') formé d'une roue comprenant une jante (3, 3') dotée d'une valve de gonflage (4, 4'), d'un pneumatique (2, 2') monté sur ladite jante de ladite roue, et d'un boudin mousse (5, 5') placé à l'intérieur du volume délimité par la paroi interne du pneumatique (2, 2') et la jante de la roue (3, 3'), dans lequel le boudin mousse (5, 5') est disposé dans un premier compartiment (A), en communication avec l'atmosphère par l'intermédiaire d'un conduit (44, 44', 46'), et isolé du reste de l'espace intérieur de l'enveloppe du pneumatique par des moyens (51, 302') assurant l'étanchéité entre la paroi dudit premier compartiment (A) et un élément de la paroi interne de la jante ou de l'enveloppe, de manière à former un deuxième compartiment (B) étanche à l'air, communiquant avec la valve de gonflage (4, 4'), et gonflé à la pression d'utilisation du pneumatique, **caractérisé en ce que** ledit conduit de mise à l'atmosphère (44, 44', 46') est doté d'un dispositif d'obturation (45, 45', 47, 48) placé en position fermée pendant le roulage, et apte à être placé en position ouverte entre deux phases de roulage.

2. Système selon la revendication 1, dans lequel le dispositif d'obturation du conduit (44) de mise à l'atmosphère est formé par un obturateur manoeuvrable manuellement (47, 48).

3. Système selon la revendication 2 dans lequel le dispositif d'obturation du conduit (44) de mise à l'atmosphère comporte une bague rotative (47, 48).

4. Système selon la revendication 2 dans lequel le dispositif d'obturation du conduit (44) de mise à l'atmosphère est formé par un bouchon étanche à l'air.

5. Système selon la revendication 1 dans lequel le dispositif d'obturation du conduit de mise à l'atmosphère (44, 44', 46') est formé par un clapet mobile (45, 45').

6. Système selon la revendication 5 dans lequel le clapet mobile (45, 45') obture le conduit de mise à l'atmosphère (44, 46') sous l'action de la force centrifuge lors de la mise en rotation dudit système.

7. Système selon la revendication 6 dans lequel le clapet mobile (45, 45') est doté d'un ressort de tarage (49) dont l'action a pour effet de repousser le clapet mobile contre son siège (46).

8. Système selon la revendication 6 dans lequel un clapet anti-retour est placé au niveau du conduit (44) de mise à l'atmosphère, autorisant la mise à l'air libre du premier compartiment A uniquement lorsque la pression à l'intérieur de ce dernier est supérieure à la pression atmosphérique.

9. Système selon l'une des revendications 1 à 8 dans lequel le conduit de mise à l'atmosphère (44) est intégré à la valve de gonflage (4).

10. Système selon l'une des revendications 1 à 9 dans lequel la pression dans le premier compartiment A diminue sous l'action de la force centrifuge.

11. Système selon la revendication 10 dans lequel une diminution de pression dans le premier compartiment a pour effet de limiter l'éloignement de la base (52, 52') du boudin mousse (5, 5') de la partie radialement interne (31, 301') de la jante (3, 3').

## Claims

1. A system (1, 1') formed of a wheel comprising a rim (3, 3') equipped with an inflation valve (4, 4'), a tyre (2, 2') mounted on said rim of said wheel, and a foam insert (5, 5') placed inside the volume defined by the internal wall of the tyre (2, 2') and the rim (3, 3') of the wheel, in which system the foam insert (5, 5') is disposed in a first compartment (A), in communication with the atmosphere via a duct (44, 44', 46') and isolated from the rest of the space inside the tyre casing by means (51, 302') ensuring a leakproof seal between the wall of said first compartment (A) and an element of the internal wall of the rim or the casing, in such a way as to form a second leakproof compartment (B) communicating with the inflation valve (4, 4') and inflated to tyre utilisation pressure, **characterised in that** said duct for providing communication with the atmosphere (44, 44', 46') is equipped with a closing device (45, 45', 47, 48) which adopts the closed position during travel and is capable of bring brought into the open position between two travel phases.

2. A system according to claim 1, in which the device for closing the duct (44) for communication with the atmosphere takes the form of a manually manoeuvrable obturator (47,48).

3. A system according to claim 2, in which the device for closing the duct (44) for communication with the atmosphere comprises a rotary ring (47, 48).

4. A system according to claim 2, in which the device for closing the duct (44) for communication with the atmosphere takes the form of a leakproof stopper.

5. A system according to claim 1, in which the device for closing the duct for communication with the atmosphere (44, 44', 46') takes the form of a mobile check valve (45, 45').

6. A system according to claim 5, in which the mobile check valve (45, 45') closes off the duct for communication with the atmosphere (44, 46') under the action of centrifugal force when said system is set in rotation.

7. A system according to claim 6, in which the mobile check valve (45, 45') is provided with a calibrating spring (49) whose action has the effect of forcing the mobile check valve back against its seat (46).

8. A system according to claim 6, in which a nonreturn valve is placed at the level of the duct (44) for communication with the atmosphere, allowing the first compartment A to communicate with the outside air solely when the pressure inside it is greater than atmospheric pressure.

9. A system according to any one of claims 1 to 8, in which the duct for communication with the atmosphere (44) is incorporated into the inflation valve (4).

10. A system according to any one of claims 1 to 9, in which the pressure in the first compartment A diminishes under the action of centrifugal force.

11. A system according to claim 10, in which a reduction in pressure in the first compartment has the effect of limiting the distance between the base (52, 52') of the foam insert (5, 5') and the radially inner part (31, 301') of the rim (3, 3').

## Patentansprüche

1. System (1, 1'), das aus einem Rad gebildet ist, das eine Felge (3, 3') enthält, die versehen ist mit einem Reifenfüllventil (4, 4'), einem Luftreifen (2, 2'), der an der Felge des Rades montiert ist, und einem Schaumstoffwulst (5, 5'), der im Inneren eines durch die Innenwand des Luftreifens (2, 2') und die Felge des Rades (3, 3') begrenzten Volumens angeordnet ist, wobei der Schaumstoffwulst (5, 5') in einem ersten Fach (A) angeordnet ist, das mit der Atmosphäre über eine Leitung (44, 44', 46') in Verbindung steht und vom Rest des Innenraums der Mantel des Luftreifens durch Mittel (51, 302') isoliert ist, die die Dichtigkeit zwischen der Wand des ersten Fachs (A) und einem Element der Innenwand der Felge oder des Mantels sicherstellen, derart, dass ein zweites luftdichtes Fach (B) gebildet wird, das mit dem Reifenfüllventil (4, 4') in Verbindung steht und auf den Verwendungsdruck des Luftreifens aufgeblasen ist, **dadurch gekennzeichnet, dass** die Atmosphärenverbindungsleitung (44, 44', 46') mit einer Verschlussvorrichtung (45, 45', 47, 48) versehen ist, die während des Rollens in die geschlossene Stellung versetzt ist und zwischen zwei Rollphasen in die geöffnete Stellung versetzt werden kann.

2. System nach Anspruch 1, wobei die Verschlussvorrichtung der Atmosphärenverbindungsleitung (44) durch einen manuell betätigbaren Verschluss (47, 48) gebildet ist.

3. System nach Anspruch 2, wobei die Verschlussvorrichtung der Atmosphärenverbindungsleitung (44) einen Drehring (47, 48) enthält.

4. System nach Anspruch 2, wobei die Verschlussvorrichtung der Atmosphärenverbindungsleitung (44) durch einen luftdichten Stopfen gebildet ist.

5. System nach Anspruch 1, wobei die Verschlussvorrichtung der Atmosphärenverbindungsleitung (44, 44', 46') durch eine bewegliche Ventilklappe (45, 45') gebildet ist.

6. System nach Anspruch 5, wobei die bewegliche Ventilklappe (45, 45') die Atmosphärenverbindungsleitung (44, 46') unter der Wirkung der Zentrifugalkraft bei der Versetzung des Systems in Drehung schließt.

7. System nach Anspruch 6, wobei die bewegliche Ventilklappe (45, 45') mit einer Kalibrierungsfeder (49) versehen ist, deren Wirkung zur Folge hat, dass die bewegliche Ventilklappe gegen ihren Sitz (46) gedrängt wird.

8. System nach Anspruch 6, wobei eine Rückschlagverhinderungsventilklappe auf Höhe der Atmosphärenverbindungsleitung (44) angeordnet ist, die zulässt, dass nur das erste Fach (A) der freien Luft ausgesetzt wird, wenn der Druck in diesem ersten Fach größer als der Atmosphärendruck ist.

9. System nach einem der Ansprüche 1 bis 8, wobei die Atmosphärenverbindungsleitung (44) in das Reifenfüllventil (4) integriert ist.

10. System nach einem der Ansprüche 1 bis 9, wobei der Druck in dem ersten Fach (A) unter der Wirkung der Zentrifugalkraft abnimmt.

11. System nach Anspruch 10, wobei eine Abnahme des Drucks in dem ersten Fach zur Folge hat, die Entfernung der Basis (52, 52') des Schaumstoffwulsts (5, 5') von dem radial inneren Teil (31, 301') der Felge (3, 3') zu begrenzen.
